# EUROPÄISCHE PATENTANMELDUNG

(11) **EP 1 327 787 A2**
(43) Veröffentlichungstag der Anmeldung: **16.07.2003**
(21) Anmeldenummer: 02028454.3
(22) Anmeldetag: 08.01.2003
(51) Int. Cl.: F16C 33/58

(54) **Wälzlager**

(30) Priorität: 09.01.2002 DE 20200241 U
(71) Anmelder: AB SKF, S-415 50 Göteborg (SE)
(72) Erfinder: Bokel, Arnold, 97525 Schwebheim (DE); Liesegang, Hans-Jürgen, 26419 Schortens-Heidmühle (DE)
(74) Vertreter: Gosdin, Michael

(57) **Zusammenfassung**

Die Erfindung betrifft ein Wälzlager (1) bestehend aus einem Innenring (2), einem Außenring (3) und zwischen Innenring (2) und Außenring (3) angeordneten Wälzkörpern (4). Um die vollen Vorteile beim Einsatz von Faserverbundwerkstoffen oder Kunststoffen als Material für die Lagerringe nutzen zu können, besteht zumindest einer der Lagerringe (2, 3), vorzugsweise beide Lagerringe, zumindest teilweise aus Faserverbundwerkstoffen oder aus Kunststoff, wobei an einem der Lagerringe (2, 3) eine Anzahl über den Umfang gleichmäßig verteilt angeordnete Antriebsstifte (5) angeordnet sind.

## Beschreibung

Die Erfindung betrifft ein Wälzlager, bestehend aus einem Innenring, einem Außenring und zwischen Innenring und Außenring angeordneten Wälzkörpern.

Als Ausgangsmaterial für die Fertigung der Ringe eines Wälzlagers ist es aus der **US 5,866,647** bekannt geworden, einen Faserverbundwerkstoff einzusetzen, bei dem die Festigkeit des Materials durch Glasfasern oder ähnliche Fasermaterialien erhöht wird. Ein solches Material zeichnet sich im Vergleich zu Stahl durch ein geringeres Gewicht aus. Weiterhin ist die Korrosionsbeständigkeit hoch und die thermische Ausdehnung gering.

Insbesondere bei großen Wälzlagern der gattungsgemäßen Art, die beispielsweise als Drehkranzlager oder als Schwenklager ausgebildet sind, besteht gelegentlich die Forderung, einen der Lagerringe über Getriebemittel direkt anzutreiben. Hierzu wird einer der Lagerringe mit einer Außenverzahnung versehen, in die ein Antriebsritzel eingreift und dadurch den Lagerring antreibt. Dies stellt bei Gehäuseringen aus Metall kein Problem dar. Werden die Ringe jedoch aus Kunststoff oder Faserverbundwerkstoff gefertigt, reicht die Festigkeit des Materials zum Übertragen der Antriebskräfte nicht aus. In diesem Fall muss ein Zahnkranz aus Metall am jeweiligen Lagerring angebracht werden.

Dies hat in nachteilhafter Weise zur Folge, dass das Gewicht des Lagers erheblich steigt, ferner ist ein anderes Bauteil, nämlich der Zahnkranz, aus Metall erforderlich. Probleme ergeben sich schließlich aufgrund der unterschiedlichen Wärmeausdehnungen des Kunststoffs bzw. Faserverbundwerkstoffs und des Metalls. Auch ist die Verbindung des Zahnkranzes mit dem Ring nicht unproblematisch.

Der Erfindung liegt daher die **Aufgabe** zugrunde, ein Lager der eingangs genannten Art so weiterzuentwickeln, dass die vollen Vorteile beim Einsatz von Faserverbundwerkstoff oder Kunststoff als Material für die Lagerringe genutzt werden können, ohne für den Antrieb eines der Lagerringe die obengenannten Nachteile in Kauf nehmen zu müssen.

Zur **Lösung** dieser Aufgabe sieht die vorliegende Erfindung bei dem eingangs beschriebenen Wälzlager vor, dass zumindest einer der Lagerringe, vorzugsweise beide Lagerringe, zumindest teilweise aus Faserverbundwerkstoffoder aus Kunststoff bestehen und dass an einem der Lagerringe eine Anzahl über den Umfang gleichmäßig verteilt angeordnete Antriebsstifte angeordnet sind.

Die der Erfindung zugrundeliegende Idee stellt also auf den Einsatz einer sogenannten Triebstockverzahnung zum Antrieb eines der Lagerringe ab. Der Lagerring, der anzutreiben ist, wird mit Antriebsstiften versehen, die dazu geeignet sind, mit einem Zahn eines Antriebsritzels in Verbindung zu treten, wodurch der Antrieb des Lagerrings durch das Antriebsritzel bewerkstelligt werden kann.

Mit Vorteil erstreckt sich die Achse der Antriebsstifte in Lagerachsrichtung.

Gemäß einer Variante ist vorgesehen, dass der Innenring oder der Außenring im Schnitt einen U-förmigen Abschnitt aufweist, wobei die Antriebsstifte die beiden Schenkel des U durchsetzen.

Alternativ weist der Innenring oder der Außenring einen ringförmigen Abschnitt auf, wobei die Antriebsstifte den ringförmigen Abschnitt nach einer Seite überragen.

Weiterhin alternativ kann vorgesehen sein, dass der Innenring oder der Außenring einen ringförmigen Abschnitt aufweist, wobei die Antriebsstifte den ringförmigen Abschnitt beidseitig überragen.

Bevorzugt sind sowohl am Innenring als auch am Außenring metallische Drähte, insbesondere Stahldrähte, zum Anlauf der Wälzkörper angeordnet.

Der als Werkstoff für die Lagerringe zum Einsatz kommende Faserverbundwerkstoff kann Kohlefasern aufweisen; alternativ oder additiv können auch Glasfasern zum Einsatz kommen.

Das Wälzlager ist mit Vorteil als Drehkranzlager oder als Schwenklager ausgebildet.

Der Innenring und/oder der Außenring des Lagers können mit Gewindebohrungen versehen sein, über die Anbauteile an den Ringen befestigt sind. Weiterhin kann vorgesehen werden, dass zumindest einer der Lagerringe kreissegmentartig geteilt ausgebildet ist. In die aus Faserverbundwerkstoff oder Kunststoff bestehenden Lagerringe kann ein Funktionselement integriert sein. Bei diesem kann es sich um eine elektrische Wicklung oder um eine weitere Verzahnung handeln.

Besonders bevorzugt bestehen die Antriebsstifte, die an einem der Lagerringe angeordnet sind, aus Metall, insbesondere aus Stahl.

Mit der erfindungsgemäßen Ausgestaltung lässt sich in vorteilhafter Weise erreichen, dass sich ein Großlager realisieren lässt, das sich durch besonders geringes Gewicht auszeichnet. Trotzdem ergibt sich im Zahnkontakt der einen Ring antreibenden Verzahnung eine sehr hohe Festigkeit. Es ergeben sich auch keine Verbindungsprobleme zwischen Ring und den eingesetzten Triebstöcken (Antriebsstifte). Die unterschiedliche Wärmeausdehnung zwischen dem Material der Lagerringe (Faserverbundwerkstoff, Kunststoff) und den Antriebsstiften (Metall) spielt hier keine bedeutende Rolle. Schließlich ist die Herstellung des erfindungsgemäßen Wälzlagers in sehr kostengünstiger Weise möglich.

In der Zeichnung sind Ausführungsbeispiele der Erfindung dargestellt. Es zeigen:
- Figur 1: schematisch den Radialschnitt durch ein Wälzlager, dessen Innenring mit einer Triebstockverzahnung ausgeführt ist,
- Figur 2: eine zu Figur 1 alternative Ausgestaltung,
- Figur 3: eine weitere zu Figur 1 alternative Ausgestaltung,
- Figur 4: eine weitere zu Figur 1 alternative Ausgestaltung und
- Figur 5: eine weitere zu Figur 1 alternative Ausgestaltung.

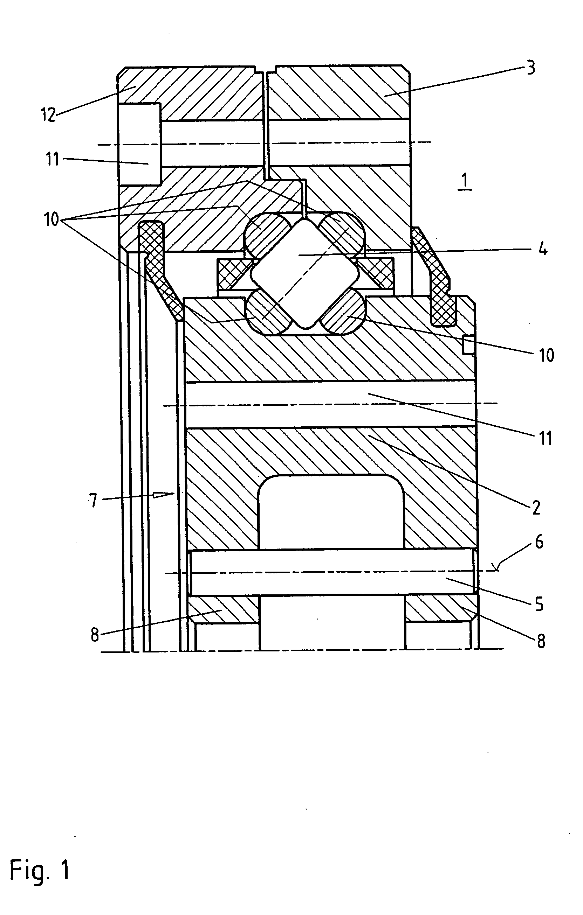

Das in Figur 1 dargestellte Wälzlager 1 weist einen Innenring 2 und einen Außenring 3 auf. Zwischen Innenring 2 und Außenring 3 sind Wälzkörper 4 angeordnet.

Den Anlauf für die Wälzkörper 4 bilden Laufdrähte 10, die aus Stahl bestehen und mit dem Innen- bzw. Außenring verbunden sind. Das Grundmaterial des Innenrings 2 und des Außenrings 3 ist ein Faserverbundwerkstoff oder Kunststoff. Wenn das Grundmaterial Faserverbundwerkstoff ist, können Kohlefasern und/oder Glasfasern in das Material eingelagert werden. Diese Fasern erhöhen die Festigkeit des Materials erheblich, während gleichzeitig die Dichte des Materials im Vergleich zu reinem Metall abnimmt. Details hierzu sind in der US 5,866,647 dargestellt.

Der Innenring 2 wird vorliegend durch ein nicht dargestelltes Ritzel angetrieben. Dieses kämmt mit gleichmäßig über dem Umfang verteilt angeordneten Antriebsstiften 5 aus Metall. Die Achse 6 der Antriebsstifte 5 liegt in Lagerachsrichtung. Der Innenring 2 weist im Querschnitt betrachtet einen U-förmigen Abschnitt 7 auf. Die Antriebsstifte 5 (Triebstöcke) durchsetzen die beiden Schenkel 8 des U-förmigen Abschnitts 7. Anbauteile 12 können durch Verschraubung festgelegt sein, wozu Gewindebohrungen 11 dienen.

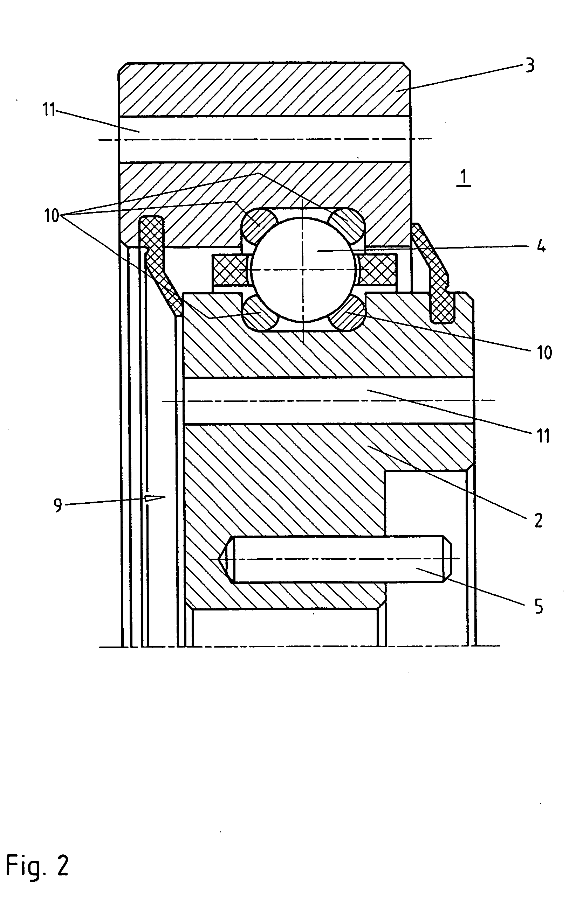

Die in Figur 2 dargestellte Alternative zeichnet sich dadurch aus, dass ein ringförmiger Abschnitt 9 vorgesehen ist, in den die Antriebsstifte 5 eingesetzt sind, so dass diese einseitig in Achsrichtung aus dem ringförmigen Abschnitt 9 hervorragen.

An dieser axialen Position wird das - nicht dargestellte - Antriebsritzel zum Antrieb des Innenrings 2 angeordnet.

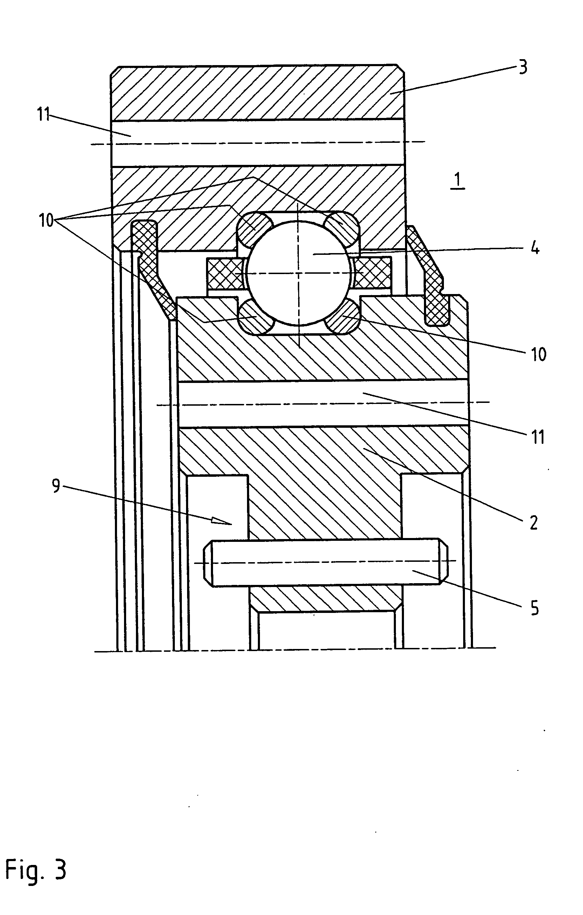

Aus Figur 3 ergibt sich, dass die Antriebsstifte 5 in den ringförmigen Abschnitt 9 des Innenrings 2 so eingesetzt sind, dass die Stifte 5 beidseits des ringförmigen Abschnitts 9 hervorragen. Hierdurch ist die Möglichkeit geschaffen, dass die Antriebsstifte 5 durch zwei Antriebsritzel (nicht dargestellt) angetrieben werden können.

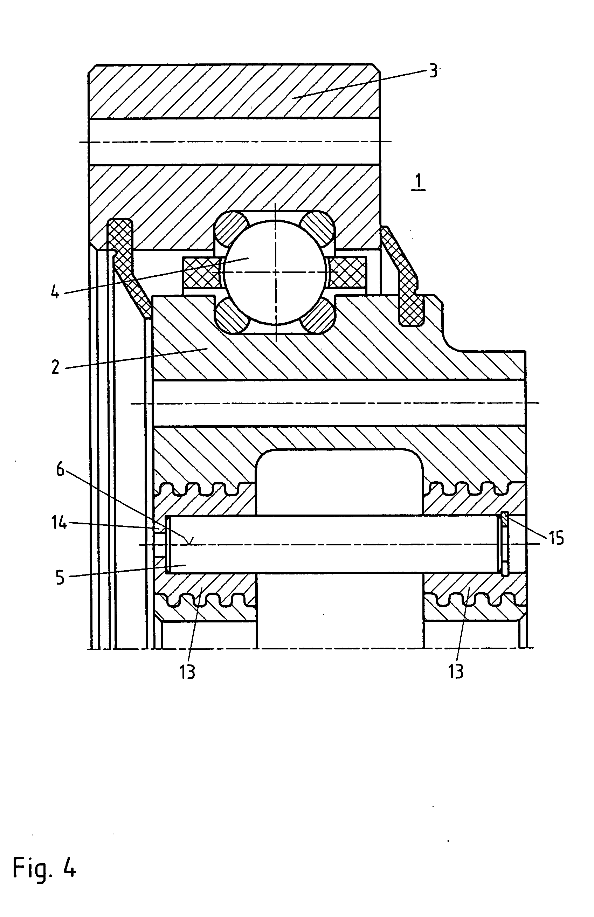

In Figur 4 ist eine alternative Ausgestaltung dargestellt, bei der vorgesehen ist, dass die Antriebsstifte 5 der Triebstockverzahnung auswechselbar sind. Im Innenring ist eine Führungsbuchse 13 angeordnet, die vorliegend aus eingegossenem Material besteht, das an der Kontaktfläche zum Antriebsstift 5 gehärtet und ansonsten gegen Korrosion geschützt ist; hierzu ist es z. B. nitrokarburiert und nachoxidiert. Die einzelnen Antriebsstifte 5 sitzen mit Übergangspassung in der Aufnahmebohrung der Führungsbuchse 13. Das Herausgleiten (nach links) ist durch einen Anschlag 14 verhindert, der an einer der beiden Führungsbuchsen 13 angeordnet ist. Die axiale Festlegung des Antriebsstifts 5 gegen Herausgleiten in die andere axiale Richtung (nach rechts) wird durch einen Seegerring 15 bewerkstelligt.

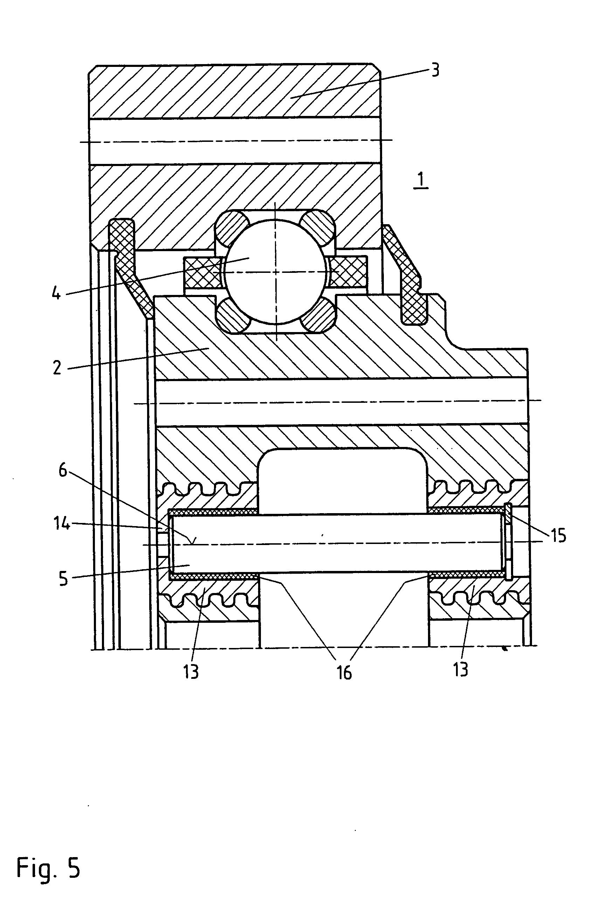

Im Ausführungsbeispiel nach Figur 5 ist zu sehen, dass die einzelnen Antriebsstifte 5 in den Führungsbuchsen 13 in einer Gleitlagerbeschichtung 16 gelagert sind. In diesem Falle liegt eine enge Spielpassung zwischen Antriebsstift 5 und Gleitlagerbeschichtung 16 vor. Nach dieser Ausgestaltung ist es möglich, dass sich die einzelnen Antriebsstifte 5 beim Eingriff mit einem Ritzel verdrehen können, wodurch erreicht werden kann, dass die Standfestigkeit der gesamten Anordnung erhöht wird, da der gesamte Umfang der Antriebsstifte 5 in Kontakt mit der Gleitlagerbeschichtung 16 in Eingriff kommt.

Möglich ist es auch - das ist jedoch nicht in den Figuren dargestellt -, dass die Antriebsstifte 5 an ihren Enden mit einem Sechskant versehen sind, so dass man sie gezielt in vier verschiedenen Einbaupositionen anordnen kann. Auch dadurch ist die Standzeit der Triebstockverzahnung verlängerbar.

### Bezugszeichenliste

- 1: Wälzlager
- 2: Innenring
- 3: Außenring
- 4: Wälzkörper
- 5: Antriebsstifte
- 6: Achse der Antriebsstifte
- 7: U-förmiger Abschnitt
- 8: Schenkel des U
- 9: ringförmiger Abschnitt
- 10: Laufdrähte (Stahldrähte)
- 11: Gewindebohrung
- 12: Anbauteil
- 13: Führungsbuchse
- 14: Anschlag
- 15: Seegerring
- 16: Gleitlagerbeschichtung

## Patentansprüche

1. Wälzlager (1), bestehend aus
- einem Innenring (2),
- einem Außenring (3) und
- zwischen Innenring (2) und Außenring (3) angeordneten Wälzkörpern (4),
wobei zumindest einer der Lageringe (2, 3), vorzugsweise beide Lagerringe, zumindest teilweise aus Faserverbundwerkstoff oder aus Kunststoff bestehen und
wobei an einem der Lagerringe (2, 3) eine Anzahl über den Umfang gleichmäßig verteilt angeordnete Antriebsstifte (5) angeordnet sind.

2. Wälzlager nach Anspruch 1, **dadurch gekennzeichnet, dass** sich die Achse (6) der Antriebsstifte (5) in Lagerachsrichtung erstreckt.

3. Wälzlager nach Anspruch 1 oder 2, **dadurch gekennzeichnet, dass** der Innenring (2) oder der Außenring (3) im Schnitt einen U-förmigen Abschnitt (7) aufweist, wobei die Antriebsstifte (5) die beiden Schenkel (8) des U durchsetzen.

4. Wälzlager nach Anspruch 1 oder 2, **dadurch gekennzeichnet, dass** der Innenring (2) oder der Außenring (3) einen ringförmigen Abschnitt (9) aufweist, wobei die Antriebsstifte (5) den ringförmigen Abschnitt (9) nach einer Seite überragen.

5. Wälzlager nach Anspruch 1 oder 2, **dadurch gekennzeichnet, dass** der Innenring (2) oder der Außenring (3) einen ringförmigen Abschnitt (9) aufweist, wobei die Antriebsstifte (5) den ringförmigen Abschnitt (9) beidseitig überragen.

6. Wälzlager nach einem der Ansprüche 1 bis 5, **dadurch gekennzeichnet, dass** sowohl am Innenring (2) als auch am Außenring (3) metallische Drähte (10), insbesondere Stahldrähte, zum Anlauf der Wälzkörper (4) angeordnet sind.

7. Wälzlager nach einem der Ansprüche 1 bis 6, **dadurch gekennzeichnet, dass** der Faserverbundwerkstoff Kohlefasern aufweist.

8. Wälzlager nach einem der Ansprüche 1 bis 6, **dadurch gekennzeichnet, dass** der Faserverbundwerkstoff Glasfasern aufweist.

9. Wälzlager nach einem der Ansprüche 1 bis 8, **dadurch gekennzeichnet, dass** das Wälzlager als Drehkranzlager ausgebildet ist.

10. Wälzlager nach einem der Ansprüche 1 bis 8, **dadurch gekennzeichnet, dass** das Wälzlager als Schwenklager ausgebildet ist.

11. Wälzlager nach einem der Ansprüche 1 bis 10, **dadurch gekennzeichnet, dass** das der Innenring (2) und/oder der Außenring (3) mit Gewindebohrungen (11) versehen ist, über die Anbauteile (12) an den Ringen befestigt sind.

12. Wälzlager nach einem der Ansprüche 1 bis 11, **dadurch gekennzeichnet, dass** zumindest einer der Lagerringe (2, 3) kreissegmentartig geteilt ausgebildet ist.

13. Wälzlager nach einem der Ansprüche 1 bis 12, **dadurch gekennzeichnet, dass** in die aus Faserverbundwerkstoff oder Kunststoff bestehenden Lagerringe (2, 3) mindestens ein Funktionselement integriert ist.

14. Wälzlager nach Anspruch 13, **dadurch gekennzeichnet, dass** das Funktionselement eine elektrische Wicklung ist.

15. Wälzlager nach Anspruch 13, **dadurch gekennzeichnet, dass** das Funktionselement eine Verzahnung ist.

16. Wälzlager nach einem der Ansprüche 1 bis 15, **dadurch gekennzeichnet, dass** die Antriebsstifte (5) aus Metall, insbesondere aus Stahl, bestehen.

17. Wälzlager nach einem der Ansprüche 1 bis 16, **dadurch gekennzeichnet, dass** die Antriebsstifte (5) in Führungsbuchsen (13) angeordnet sind, die in einem der Lagerringe (2, 3) angeordnet sind.

18. Wälzlager nach Anspruch 17, **dadurch gekennzeichnet, dass** mindestens eine der Führungsbuchsen (13) einen Anschlag (14) für den Antriebsstift (5) aufweist.

19. Wälzlager nach Anspruch 17, **dadurch gekennzeichnet, dass** mindestens eine der Führungsbuchsen (13) eine Nut zur Aufnahme eines Seegerrings (15) zur axialen Festlegung des Antriebsstiftes (5) aufweist.

20. Wälzlager nach einem der Ansprüche 17 bis 19, **dadurch gekennzeichnet, dass** zwischen Führungsbuchse (13) und Antriebsstift (5) eine Gleitlagerbeschichtung (16) angeordnet ist.
